# EUROPEAN PATENT APPLICATION

(11) **EP 2 957 178 A1**
(43) Date of publication of application: **23.12.2015**
(21) Application number: 14172554.9
(22) Date of filing: 16.06.2014
(51) Int. Cl.: A23C 3/00, A23C 3/03, A23C 3/07, A23C 3/04, A23C 9/20

(54) **Method and apparatus for preparation of human milk to be stored**

(71) Applicant: Carag AG, 6340 Baar (CH)
(72) Inventor: RÖTHLIN, Cyrill, 6331 Hünenberg (CH); CHRISTEN, Lukas, 6004 Luzern (CH)
(74) Representative: Clerc, Natalia

(57) **Abstract**

A method for preparation of human milk to be stored comprises the steps of
- subjecting the human milk (M) to a treatment for inactivating or reducing an amount of biological contaminants in the human milk (4, 5),
- freezing (3, 7) the human milk and forming flakes of the human milk and
- collecting the frozen human milk flakes (F) in a container (6).

This method and an according apparatus enable storing human milk for later use in a very small dose, i.e. in the form of pasteurized frozen milk flakes.

## Description

### TECHNICAL FIELD

The present invention relates to a method, an apparatus for preparation or treatment of human milk to be stored and frozen human milk particles, preferably flakes.

### PRIOR ART

Human milk is very seldom sterile. Presently, approximately 15% of milk collected at various milk banks has to be thrown away in some countries because it contains pathogenic bacteria such as *S. aureus, Enterobacteriaceae* and *Enterococci.* Approximately 6% has to be thrown away because the total count of bacteria is over 100,000 colony forming units (CFU/ml). Furthermore, Human immunodeficiency virus (HIV), cytomegalovirus (CMV), Human T-lymphotropic virus (HTLV) and other viruses may be transmitted by human milk and cause infections and disease. Furthermore, transmission of diseases can also be mediated through heat resistant spores that survive thermal pasteurization.

Pasteurization of food, especially of bovine milk is well known. It is used for killing or inactivating microorganisms present in the food to prevent spoilage of the food, by the growth of the microorganisms in the food. Pasteurization occurs by heating the food to a specific temperature for a specific period of time so as to reduce the number of viable microorganisms in the food. This process is referred to as thermal pasteurization. Two common methods are known. They involve exposure of milk to a high temperature for a short period of time, followed by immediate cooling. The first method of thermal pasteurization is referred to as High Temperature Short Time (HTST) where milk is exposed to a temperature of approximately 72°C for 15-20 seconds. The second thermal pasteurization method is referred to as low temperature long time (LTLT) or "Holder-" pasteurization, where milk is heated to 62.5°C and kept for 30 minutes. These are the only universally approved techniques.

Pasteurization of human milk becomes more and more important. It is currently employed for milk banking where milk is donated, screened and supplied to an infant when milk from the infant's mother is not available.

Human milk can be pasteurized by HTST or LTLT methods. Holder Pasteurization is capable of causing a 5-log₁₀ reduction of a variety of bacterial species including *Escherichia coli, Staphylococcus epidermidis, Enterobacter cloacae, Bacillus cereus* and *Staphylococcus aureus* in human milk (Czank C, et al, Pediatric Research 2009; 66:374-379). Furthermore, HIV, CMV and HTLV are eliminated by the Holder pasteurization (Orloff S. et al., Journal of Human Lactation 1993; 9:13-17 / Hamprecht K. et al., Pediatric Research 2004, 56:529-535 / Yamato K. et al, Japanese Journal of Cancer Research 1986; 77:13-15). Therefore, thermal pasteurization minimizes the risk of transmission of diseases via human milk.

However, important, heat labile bioactive components present in human milk can be altered or lost from the milk when it is subjected to thermal pasteurization. Accordingly, there exists a need to provide an improved method of pasteurization of human milk that sufficiently inactivates biological contaminants without altering or inactivating important bioactive components.

Ultraviolet (UV) light treatment has been employed for the pasteurization and decontamination of drinking water, beer, wine and fruit juices, cut and whole fruit and also for air purification and packaging of fresh food. Exposure of substances to UV, or UV treatment, is classified as a non-thermal disinfection method. This has been referred to by some in the art as "UV-" or "Cold Pasteurization".

Ultraviolet light is defined as electromagnetic radiation having wavelengths shorter than visible light but longer than X-rays. Effective UV treatment of a liquid to be pasteurized requires a sufficient dosage, i.e. sufficient exposure of the biological contaminants to the UV. The degree to which UV penetrates the liquid depends on the solubility, density and turbidity of the liquid.

Previous studies have demonstrated that UV treatment could be used to reduce the microbial load of opaque liquids. However, milk is difficult to treat with UV due to its high absorption coefficient of 300cm⁻¹ at a wavelength of 254nm compared to the absorption coefficient of drinking water and beer with 0.1 and 20cm⁻¹, respectively.

Indeed, various flow-through reactors have been developed to ensure sufficient UV exposure is achieved where large volumes of liquid are to be treated and where the liquids to be treated are turbid and light penetration is limited. Such flow-through reactors are designed to spread the liquid into a thin layer or film, or alternatively, a turbulent flow is imparted to the liquid which is caused to flow around the UV source thereby exposing the biological contaminants to photons at the interface between the opaque liquid and the photon source. Such apparatuses are described in US Patents 5,675,153; 5,567,616; 6,540,967 and 6,576,201 and WO 01/37675.

However, there exist a number of disadvantages associated with current methods and devices for pasteurization of bovine milk or fruit juice that make their application to pasteurization of human milk unworkable.

Firstly, present methods are directed towards the treatment of large volumes of milk which are required to be pumped from a source to a UV reactor and subsequently recirculated or passed through a plurality of reactors. Human milk can only be collected in small volumes and such small volumes would be lost in those large reactors.

Secondly, other problems associated with the requirement to pump milk through a reactor include: stasis of the milk within certain sections of the apparatus which permits collection and growth of biological contaminants; deposition of milk solids upon the surfaces of the reactor which can lead to impedance of UV penetration and difficulty in cleaning the apparatus; and undesirable properties being imparted to the milk such as the formation of butter from coalescence of milk fat globules resulting from turbulent flow applied to the milk. These devices can be difficult to maintain.

Another problem faced by present methods of pasteurizing human milk is a reduction and/or loss of activity of various important bioactive components present in human milk. Current methods for pasteurization of human milk, such as Holder pasteurization, are aimed at reducing the bacterial load of human milk without consideration of maintaining an effective level of important bioactive components in the milk. Pasteurization of human milk is based on the technology developed by the dairy industry. The aim of the dairy industry is to reduce the enzymatic activity in bovine milk to increase self-life. In human milk the enzymatic activity is needed to transfer the whole benefit of human milk to the infant.

Human milk has been shown to inhibit the growth of *Escherichia coli, Staphylococcus aureus* and *Candida* sp. This bacteriostatic property of human milk is thought to be predominantly due to immunological proteins including lactoferrin, lysozyme and sIgA. Lactoferrin is an iron-binding protein that reduces the availability of free iron required by iron-dependent pathogens such as *E. coli* and therefore inhibits their growth, as well as disrupting the bacterial cell membrane by binding to the lipid-A portion of lipopolysaccharides on the bacterial cell surface. Lysozyme lyses the cell walls of most gram-positive bacteria such as *S. aureus* by catalyzing the hydrolysis of specific bonds between N-acetylglucosamine and N-acetylmuramic acid. While lysozyme alone is bacteriostatic, an *in vitro* study showed that in presence of lactoferrin it is also bactericidal and can kill some gram-negative bacteria. Secretory IgA (sIgA) is an antibody, which is secreted specifically in response to the pathogens the mother and infant are exposed to and therefore, is boosting the infant's immune defence system. sIgA is more able to persist in the intestinal tract than other immunoglobulins due to its resistance to proteolytic enzymes. Although sIgA has no known antimicrobial activity in human milk it enhances the antimicrobial activity of lactoferrin and lysozyme and it plays a major role in the infant's immune defence when digested. The activity and retention of such bioactive components can be adversely impacted using thermal pasteurization.

The yet unpublished PCT application PCT/CH2013/000224, filed December 13, 2013 and claiming two Australian priority dates, refers to a method of pasteurizing small volumes of a human milk product and an apparatus for the same that can be conveniently used by breast feeding mothers, in milk banks, in hospitals and in other clinical settings and that overcomes the above mentioned problems. The method described in this unpublished application especially preserves or retains important bioactive components while sufficiently inactivates biological contaminants in human milk. This is achieved by exposing a milk product to ultraviolet light (UV) and imparting a vortical flow to the milk product to facilitate exposure of the contaminant in the milk product to the UV light. The apparatus for inactivating or reducing an amount of a biological contaminant in a human milk product comprises a container for containing a volume of a human milk product, a UV light source arranged outside of or inside the container such that the human milk product is exposed to UV light; and a means to apply a vortical flow to said milk product retained inside said container so as to facilitate exposure of the contaminant to the UV light source.

As used herein "vortical flow" refers to a flow of liquid wherein the liquid flows in layers in a rotary or spinning motion about an imaginary axis. The axis may be straight or curved. There may be some disruption or mixing in the flow between layers and some turbulence which may occur at various points in the flow of a liquid within a container but the majority of the liquid flows in a vortical fashion.

The vortical flow may be imparted by placing a magnetic bar into the milk container and by rotating the magnetic bar with an appropriate device. It is suggested to use a magnetic stirrer. A balance is applied in creating a fast enough flow for optimal microorganism exposure to the UV-C photons and minimizing the risk of damaging the human milk. This can be achieved by adjusting the revolution speed and/or the method of stirring. Furthermore the size and shape of the stirring means may be adjusted to reduce shear forces. It is also suggested to use a rotating container.

The method and apparatus preferably inactivate or reduce the amount of a biological contaminant present in human milk, wherein the contaminant is selected from *E. coli, Staphylococcus* spp., *Streptococcus* spp., *Bacillus* spp., *Enterococcus* spp. and *Enterobacter* spp. Preferably, they additionally or alternatively inactivate or reduce the amount of a biological contaminant present in human milk, wherein the contaminant is selected from CMV, HIV and HTLV.

As used herein, the term "biological contaminant" refers to but is not limited to microorganisms such as viruses, bacteria, protozoa, yeasts, spores, moulds and algae. Such biological contaminants can include viruses (including viral nucleic acids) selected from but not limited to B-type (retrovirus-like particles), Coxsackievirus B3, Cytomegalovirus (CMV), Ebola virus, Echovirus 18, Epstein-Barr virus (EBV), Hepatitis B virus, Hepatitis C virus, Hepatitis E virus, Herpes simplex virus type 1, Human herpesvirus 6, Human herpesvirus 7, Human immunodeficiency virus (HIV) type 1 (and 2), Human T-lymphotropic virus (HTLV), Human papillomavirus 16, Rotavirus, Rubella virus, Sin nombre (no name) hantavirus RNA, Transfusion-transmission virus (TTV), Varicellazoster virus, West Nile virus; Bacteria and fungi including but not limited to *Staphylococcus* spp., *Streptococcus* spp., *Bascillus* spp., *Campylobacter* spp., *Enterococcus* spp. and *Enterobacter* spp., *E. coli, Bacillus cereus, Borrelia burgdorferi, Brucella melitensis, Burkholderia pseudomallei, Candida albicans, Citrobacter freundii, Coxiella burnetti, Enterbacter aerogenes, E. cloaca, Klebsiella pneumonia, Lactobacillus gasseri, Enterococcus faecium, Leptospira australis, Listeria monocytogenes, Mycobacterium paratuberculosis, Mycobacterium tuberculosis, Pseudomonas Aeruginosa, Salmonella Kottbus, Salmonella panama, Salmonella senftenberg, Salmonella typhimurium, Serratia marcescens, Staphylococcus aureus, Staphylococcus epidermis and Streptococcus agalactiae;* Parasites including but not limited to *Necator americanus, Onchocerca volvulus, Schistosoma mansoni, Strongyloides fulleborni*, *Toxoplasma gondii, Trichinella spiralis,* and *Trypanosoma cruzi.*

As used herein, the term "inactivate" (and forms thereof) means the actual destruction, eradication of a contaminant, or a direct or indirect effect on the contaminant that substantially inhibits its ability to replicate or otherwise to adversely affect a living recipient.

As used herein the term "reduce" (and variants thereof) when applied to a biological contaminant refers to a lowering in the amount of biological contaminant or a reduction in the number of contaminants that are active and/or capable of replicating and/or infecting an individual.

When the above mentioned treated human milk shall be stored, it is usually frozen in bottles or flexible bags. However, the frozen human milk has to be thawed in the whole amount. Especially when a premature baby has to be fed, the amount is usually to big. Thawed human milk which can not be fed within a very short period of time has to be thrown away.

### SUMMARY OF THE INVENTION

It is therefore an object of the invention to provide a method, an apparatus for preparation or treatment of human milk to be stored and to also provide human milk in a form which also enables using it in small amounts.

This object is achieved with a method, an apparatus and frozen human milk particles, preferably flakes according to claims 1, 10 and 15 respectively.

The inventive method for preparation of human milk to be stored comprises the steps of
- subjecting the human milk to a treatment for inactivating or reducing an amount of biological contaminants in the human milk,
- freezing the human milk and forming particles, preferably flakes, of the human milk and
- collecting the frozen human milk particles in a container.

By subjecting the human milk to a treatment for inactivation or reducing an amount of biological contaminants in the human milk, the milk can be stored without decaying too early. By freezing the human milk and forming frozen particles, such as flakes, a sufficient big amount can be stored in one single container, wherein only a smaller, actually needed amount can be taken out of the container and can be thawed, the rest of the particles still remaining frozen.

The treatment for inactivation or reducing an amount of biological contaminants in the human milk can be any kind of efficient treatment, such as thermal pasteurization. However, in a most preferred variant of the inventive method, the human milk is irradiated with UV light, preferably with UV-C light and thereby submitted to "cold pasteurization". This treatment is described in the not yet published PCT/CH2013/000224.

In a preferred variant of the inventive method, the treatment for inactivating or reducing the amount of biological contaminants in the human milk and the freezing are subjected to the human milk at the same time. This is especially advantageous when UV light is used. Since the human milk is changed into flakes, the volume of the human milk flakes is quite small and the irradiation with UV light is quite efficient. No vortical flow or other movement of the milk is necessary to obtain an optimal result in the "cold-pasteurization" treatment.

In a preferred variant of the inventive method, a cold fluid stream, preferably a cold air stream or another gas stream, is used for freezing the human milk. The stream can be continuous or consist of discrete blasts following each other. The fluid is chosen cold enough to freeze the milk. Preferably, the human milk is forwarded through a nozzle in the form of a milk flow, thereby bringing the flow of human milk into the cold fluid stream. The flow of milk can have the same direction as the cold fluid stream or it can be arranged at an angle, for example at 90° to the cold fluid stream. The cold fluid stream preferably parts the flow of human milk into frozen flakes of human milk. The stream is preferably chosen strong enough to divide a flow of milk into flakes or other small milk particles.

In order to pasteurize the milk and to swirl it into flakes at the same time, the cold fluid stream and the human milk are preferably brought into an irradiation region of a UV light.

In another variant of the inventive method, a flow of the human milk is brought onto at least one rotating freezer drum, the at least one freezer drum is rotated, whereby the human milk is forwarded and frozen, and the frozen milk is cut or broken into flakes or other small milk particles. The milk forms a thin film on a surface of the at least one drum and it therefore quite soon frozen and can easily be broken or cut, for example by a blade, a scraper or a deflector. Since the milk film, which is forwarded on the surface of the freezer drum, is quite thin, irradiation with UV light for pasteurizing the human milk is quite efficient, no vortical flow is needed.

Preferably, two freezer drums are rotated in opposite directions to each other. In preferred embodiments, the two freezer drums contact each other at their circumference or there is only a small gap in between. The drums are preferably rotated such that their surfaces, where the milk is supplied to, are moving away from each other; i.e. when looking at the drums in operation, a right drum rotates clockwise, a left drum rotates counterclockwise.

The inventive apparatus for preparation of human milk to be stored comprises a treatment device for inactivating or reducing an amount of biological contaminants in the human milk and a freezing and flake forming device for freezing the human milk and for forming flakes of the human milk.

The treatment device can be any suitable device. In a preferred embodiment, the treatment device comprises at least one UV light source. In preferred embodiment the at least one UV light source is the only treatment element, thereby pasteurizing the human milk.

In a preferred embodiment, the at least one UV light source is arranged such with regard to the freezing and flake forming device that the light of the at least one UV light source irradiates the human milk being treated in the freezing and flake forming device.

In a preferred embodiment, the freezing and flake forming device comprises at least one blower producing a cold fluid stream, preferably a cold gas stream or cold air stream. In another preferred embodiment, the freezing and flake forming device comprises at least one rotatable freezer drum.

According to the invention, the human milk is stored in the shape of frozen milk flakes which are independent from each other and do preferably not stick to one another. They can therefore be used in small amounts individually defined by a user.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Figure 1: shows schematically an apparatus according to a first embodiment of the invention and
- Figure 2: shows schematically an apparatus according to a second embodiment of the invention.

### DESCRIPTION OF PREFERRED EMBODIMENTS

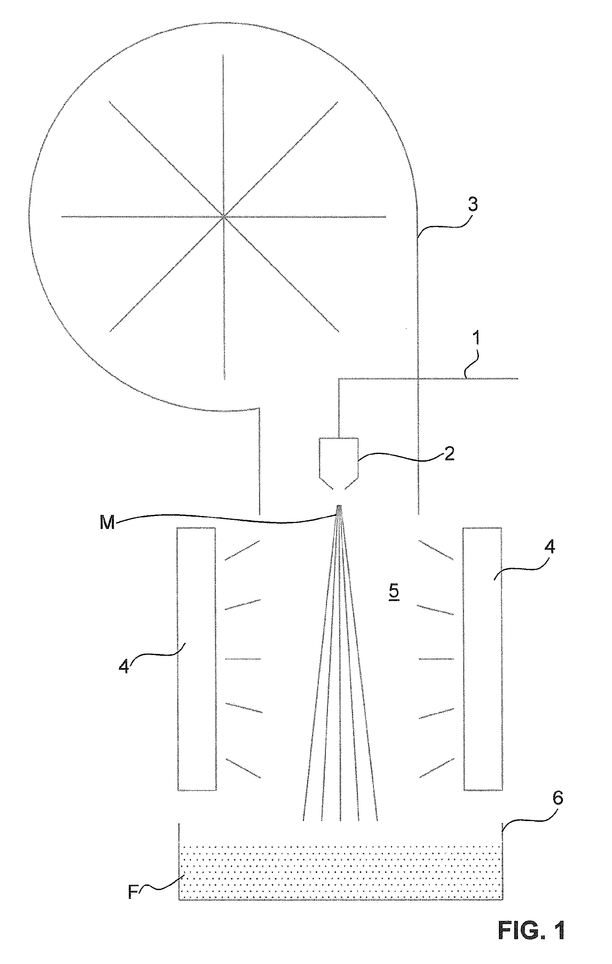

Figure 1 shows a first embodiment of an inventive apparatus. Human milk M is preferably supplied to the apparatus through a milk supply line 1 and is spread by a nozzle 2 into an irradiation area 5 of an at least one UV lamp 4. The UV lamp 4 preferably emits UV-C light. It can be injected or just flow out of the nozzle caused by gravity.

In this embodiment, the irradiation area 5 is formed by more than one lamp 5, which are preferably arranged in a circle encompassing the irradiation area. The apparatus also comprises a fan or a blower 3. The blower 3 blows cold air into the irradiation area 5. In this embodiment, the outlet direction of the nozzle 2 and the outlet direction of the blower 3 are the same. In this embodiment, the milk M and the cold air flow top down. However, the common flow direction of the cold air and the milk M can also be horizontal or at another angle. In addition, the cold air can be injected at an angle to the milk flow, for example perpendicular. A container 6 is arranged downstream of the milk flow.

When the milk M is brought into the irradiation area 5 it is subjected to cold air. This causes the milk M to divide into droplets and freeze into flakes or other small particles. During this process, the milk is also subjected to the UV light. An amount of biological contaminants in the milk M is therefore inactivated or reduced at the same time as it is frozen. The milk M is therefore pasteurized. The end product are frozen human milk flakes F which fall into the container 6 or which can be forwarded by appropriate transporting means, such as an endless conveying belt, to the container 6.

Since the milk M is parted into droplets and later frozen into small particles, such as flakes, the irradiation with UV lamp is sufficient to pasteurize the milk.

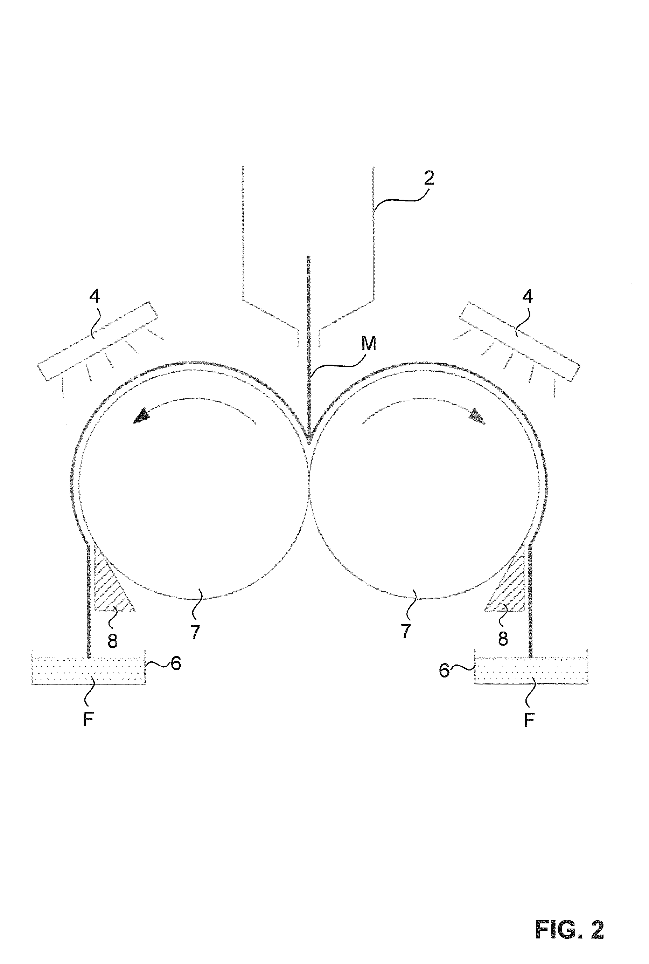

Figure 2 shows another embodiment of the invention. The apparatus shown comprises two freezing drums 7, which are rotated in opposite direction to each other. Preferably, the direction of the rotation is such that the surface of the upper parts of the drums 7 are driven away from each other. The upper parts of the drums 7 are the parts where the milk is supplied to the surface. In figure 2, arrows show this direction of rotation. Like this, milk can be distributed over a maximized area of the drum's surface. The surfaces of the freezing drums are cooled.

On top of the freezing drums 7, preferably in the middle space of the drums 7, human milk M is supplied in a stream. The surfaces of the two freezer drums 7 contact each other preferably. In another embodiment, there is a small gap between the two freezer drums 7.

The milk M preferably is supplied through a nozzle 2. The milk M is forwarded on the cooled surface of the drums 7, whereby it is parted in two thin films, each film laying on one of the surfaces of the drums 7. While being forwarded by the drums 7, the milk is subjected to UV light, preferably UV-C light. This UV light is emitted by at least one UV lamp preferably arranged above the surface of the rotating drums 7. Since the film of the milk is thin, the UV light is sufficient to inactivate or reduce an amount of biological contaminants in the milk and therefore to cold-pasteurize it.

Cutting or breaking elements, such as scrapers, deflectors or blades 8 are arranged downstream of the UV lamps, cutting or breaking the frozen milk film into flakes F and guiding them into containers 6. Once again, the end product is pasteurized frozen human milk flakes F.

In both embodiments, the shape of the nozzle 2, the temperature of the air or the freezing drums, the length of the irradiation path and the intensity of the UV light applied is chosen such that the milk is sufficiently and rapidly frozen, the milk is sufficiently parted into flakes and the milk is sufficiently pasteurized.

The inventive method and the inventive apparatus enable storing human milk for later use in a very small dose.

**LIST OF REFERENCE SIGNS**

| | | | |
|---|---|---|---|
| 1 | milk supply line | 8 | blade, scraper, deflector |
| 2 | nozzle | | |
| 3 | blower | M | Milk |
| 4 | UV lamp | F | Flakes |
| 5 | irradiation area | | |
| 6 | container | | |
| 7 | freezer drum | | |

## Claims

1. A method for preparation of human milk to be stored, wherein the method comprises the steps of
- subjecting the human milk (M) to a treatment for inactivating or reducing an amount of biological contaminants in the human milk (4, 5),
- freezing the human milk and forming particles, preferably flakes, of the human milk (3, 4) and
- collecting the frozen human milk particle (F) in a container (6).

2. The method of claim 1, wherein the human milk (M) is irradiated with UV light (4), whereby the amount of biological contaminants in the human milk is inactivated or reduced.

3. The method of one of claims 1 or 2, wherein the treatment for inactivating or reducing the amount of biological contaminants in the human milk (4, 5) and the freezing (3, 7) are subjected to the human milk at the same time.

4. The method of one of claims 1 to 3, wherein a cold fluid stream, preferably a cold air stream, is used for freezing the human milk.

5. The method of claim 4, comprising the step forwarding the human milk through a nozzle in a flow, thereby bringing the flow of human milk into the cold fluid stream.

6. The method of one of claims 4 or 5, comprising the step of forwarding the cold fluid stream into an irradiation region of a UV light and bringing the human milk into said irradiation region.

7. The method of one of claims 1 to 3, comprising the steps of
- bringing a flow of the human milk (M) onto at least one rotating freezer drum (7),
- rotating the at least one freezer drum (7), whereby the human milk is forwarded and frozen, and
- cutting or breaking the frozen milk into particles (F).

8. The method of claim 7, comprising the step of irradiating a surface of the at least one rotating freezer drum (7) with UV light, wherein the surface forwards the human milk.

9. The method of one of claim 7 or 8, comprising the step of rotating two freezer drums (7) in opposed directions to each other.

10. An apparatus for preparation of human milk to be stored, wherein the apparatus comprises a treatment device for inactivating or reducing an amount of biological contaminants in the human milk (4) and a freezing and flake forming device (3, 7) for freezing the human milk and for forming particles, preferably flakes (F), of the human milk.

11. The apparatus of claim 10, wherein the treatment device comprises at least one UV light source (4).

12. The apparatus of claim 11, wherein the at least one UV light source (4) is arranged such with regard to the freezing and flake forming device (3, 7) that the light of the at least one UV light source irradiates the human milk being treated in the freezing and flake forming device (3, 7).

13. The apparatus of one of claims 10 to 12, wherein the freezing and flake forming device comprises at least one blower (3) producing a cold fluid stream.

14. The apparatus of one of claims 10 to 12, wherein the freezing and flake forming device comprises at least one rotatable freezer drum (7).

15. Frozen human milk particles, preferably flakes (F), produced according the method of one claims 1 to 9.
